# EUROPEAN PATENT SPECIFICATION

(11) **EP 4 413 903 B1**
(45) Date of publication and mention of the grant of the patent: **29.07.2026**
(21) Application number: 21959947.9
(22) Date of filing: 07.10.2021
(51) Int. Cl.: A47G 21/10, A47G 21/06

(54) **EATING UTENSIL, MEAL MONITORING SYSTEM, AND MEAL MONITORING METHOD**
ESSBESTECK, SPEISENÜBERWACHUNGSSYSTEM UND SPEISENÜBERWACHUNGSVERFAHREN
USTENSILE POUR MANGER, SYSTÈME DE SURVEILLANCE DE REPAS ET PROCÉDÉ DE SURVEILLANCE DE REPAS

(43) Date of publication of application: 14.08.2024
(73) Proprietor: Fuji Corporation, Chiryu-shi, Aichi 472-8686 (JP)
(72) Inventor: SHIMIZU, Satoshi, Chiryu-shi, Aichi 472-8686 (JP)
(74) Representative: Grünecker Patent- und Rechtsanwälte PartG mbB
(86) International application number: PCT/JP2021/037239
(87) International publication number: WO 2023/058205

(56) References cited:
- JP-A- 2018 045 440
- JP-A- 2018 045 440
- JP-A- 2020 137 927
- JP-A- 2020 137 927
- US-A1- 2017 055 885
- US-A1- 2017 055 885
- US-B2- 9 750 361

## Description

### Technical Field

The present description discloses an eating utensil, a meal monitoring system, and a meal monitoring method.

### Background Art

Conventionally, there has been proposed a device for monitoring whether a monitoring target person is eating based on a detection result of a sensor provided in an eating utensil used for eating. For example, Patent Literature 1 describes that an acceleration sensor for detecting an acceleration of an eating utensil and a touch sensor for detecting contact with a distal end portion of the eating utensil based on a change in an electrostatic capacitance are provided, and it is determined whether eating is in progress based on detection results of the acceleration sensor and the touch sensor.

### Patent Literature

Patent Literature 1: JP-A-2020-137927
JP 2020 137927 A describes an eating determination system that comprises an eating utensil, an acceleration sensor, a touch sensor, and an eating determination unit. The eating utensil comprises a rod-like grip part and a tip disposed at one end of the grip part. The acceleration sensor detects the eating utensil's acceleration. The touch sensor detects contact with the tip. On the basis of a measurement result of the acceleration sensor and a measurement result of the touch sensor, the eating determination unit determines whether or not a user performs eating using the eating utensil.

### Summary of the Invention

It is the object of the present invention to provide an improved eating utensil and meal monitoring method.

This object is solved by the subject matter of the independent claims.

Preferred embodiments are defined by the dependent claims.

### Technical Problem

As in Patent Literature 1 described above, there is a touch sensor of a type in which an electrostatic capacitance changes even when water droplets adhere, as a touch sensor which performs detection based on a change in the electrostatic capacitance. Further, even when an eating utensil is washed by a user or a dishwasher, an acceleration sensor may detect the acceleration of the eating utensil. For this reason, an operation during washing of the eating utensil may be erroneously detected as a eating action.

A main object of the present disclosure is to detect a state of an eating utensil with higher accuracy.

### Solution to Problem

The present disclosure employs the following means in order to achieve the main object described above.

According to the present disclosure, there is provided an eating utensil used for eating, the eating utensil including: a first sensor configured to detect a change in an electrostatic capacitance by a predetermined method and a second sensor configured to detect a change in an electrostatic capacitance by a method different from the predetermined method in a change in an electrostatic capacitance when a water droplet adheres; a determination section configured to determine a state of the eating utensil based on detection results of the first and second sensors; and an output section configured to output a determination result by the determination section to an outside.

In the eating utensil of the present disclosure, the state of the eating utensil can be detected more accurately.

### Brief Description of Drawings

Fig. 1 is a configuration diagram illustrating a schematic configuration of house 1 including monitoring system 10.
Fig. 2 is a block diagram illustrating the schematic configuration of monitoring system 10.
Fig. 3 is a configuration diagram illustrating schematic configurations of chopsticks 3 and meal sensor 31.
Fig. 4 is a flowchart illustrating an example of eating determination processing.
Fig. 5 is a diagram illustrating a relationship between a detection target, presence or absence of detection by a sensor, and a determination result.
Fig. 6 is a flowchart illustrating an example of living situation monitoring processing.
Fig. 7 is a diagram illustrating an example of a living situation.

### Description of Embodiments

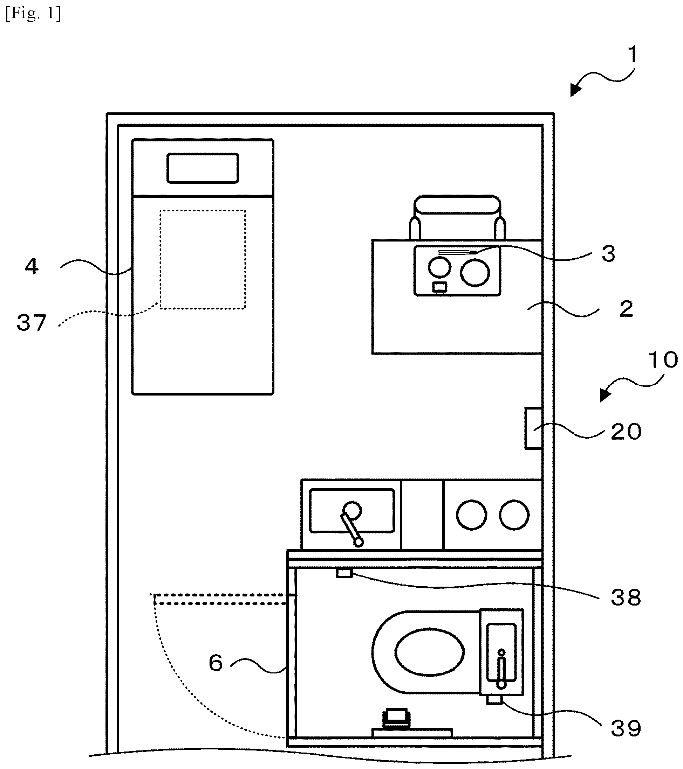

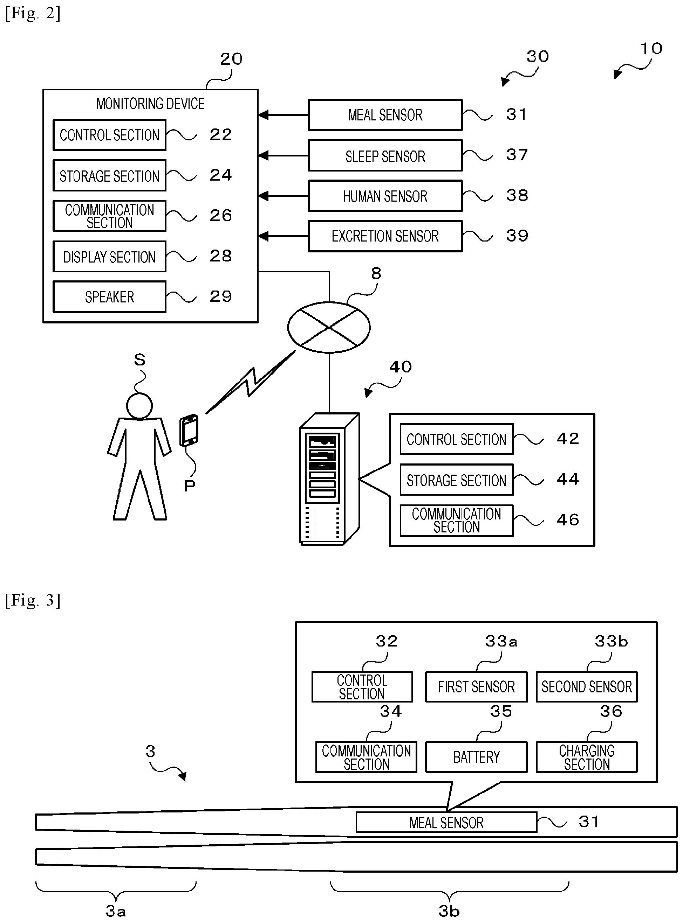

Next, embodiments of the present disclosure will be described with reference to the drawings. Fig. 1 is a configuration diagram illustrating a schematic configuration of house 1 including monitoring system 10. Fig. 2 is a block diagram illustrating the schematic configuration of monitoring system 10.

House 1 is, for example, a house of a watched or monitored target person such as an elderly person living alone, and includes, for example, a kitchen, table 2, bed 4, and toilet 6. In Fig. 1, a room of a one-room type housing complex is illustrated as house 1; however, the configuration is not limited to this, and a living room, dining room, or a kitchen may be partitioned, or house 1 may be a detached house. In addition, the target person is not limited to an elderly person as long as the target person is a person whose living situation needs to be monitored by monitoring person S (see Fig. 2), and may be a student living alone, a person who is under medical treatment, or the like.

Monitoring system 10 is a system for grasping a living situation of a monitoring target person, includes monitoring device 20 and various sensors 30 for detecting a motion of the target person or the like, and is configured to communicate with management server 40.

Monitoring device 20 includes control section 22 that controls the operation of monitoring device 20, storage section 24 that stores various information, communication section 26 that communicates with the outside, display section 28 that displays various information, and speaker 29 that outputs audio.

Control section 22 includes a microprocessor including a CPU as a main component, and includes a ROM for storing various control programs, a RAM used as a work area, an input/output port (not illustrated), and the like. Detection signals of various sensors 30 and information transmitted from management server 40 or the like via communication section 26 are input to control section 22. Control section 22 outputs a display signal for displaying various information from management server 40 on display section 28, an audio signal for outputting audio from speaker 29, and the like, and outputs various information to be transmitted from communication section 26 to the outside. Storage section 24 includes, for example, an HDD or the like, and stores various information related to the grasped situation as described later. Communication section 26 can transmit various information from control section 22 to management server 40 or the like via network 8 such as the Internet.

Monitoring system 10 includes various sensors 30, for example, meal sensor 31, sleep sensor 37, human sensor 38, and excretion sensor 39. Meal sensor 31 is provided in an eating utensil such as chopsticks 3, a spoon, or a fork, and detects whether the target person is eating. Sleep sensor 37 is, for example, a sheet type sensor provided under a mattress of bed 4, and detects whether the target person is sleeping from the pulse, respiration, or the like of the target person on bed 4, and whether the target person is in light sleep or deep sleep when the target person is sleeping. When sleep sensor 37 detects that the target person is sleeping, sleep sensor 37 transmits a detection signal to identify whether the target person is in light sleep or deep sleep. Human sensor 38 is provided in toilet 6 and detects a target person in toilet 6 in a non-contact manner. Excretion sensor 39 is provided, for example, in a washing lever or a washing switch of toilet 6, or the like, and detects a washing operation after excretion and also detects whether the washing operation is a large washing operation or a small washing operation. When excretion sensor 39 detects the washing operation, excretion sensor 39 transmits a detection signal to identify whether the washing operation is the large washing operation or the small washing operation. Various sensors 30 can transmit detection results (detection signals) to monitoring device 20 through near field communication such as ZigBee (registered trademark), Bluetooth (registered trademark), or wireless LAN.

Fig. 3 is a configuration diagram schematically illustrating configurations of chopsticks 3 and meal sensor 31. Chopsticks 3 are a set of two rod-shaped members formed in a tapered shape from the rear end side toward the front end side, and each chopstick 3 includes distal end portion 3a that comes into contact with a food material and grip portion 3b that is gripped by a hand. Meal sensor 31 is provided in one grip portion 3b of the set of two chopsticks 3.

Meal sensor 31 includes control section 32, first sensor 33a, second sensor 33b, communication section 34, battery 35, and charging section 36. Control section 32 is configured as a microprocessor including a CPU as a main component, and includes a ROM, a RAM, and the like in addition to the CPU.

First sensor 33a and second sensor 33b are electrostatic capacitance sensors that detect a change in an electrostatic capacitance. First sensor 33a is of a self-capacitance type sensor, and detects a detection target by using an increase in an electrostatic capacitance of an electrode itself when the detection target such as a hand or a finger approaches an electromagnetic field generated in one electrode. In the self-capacitance method, even when water droplets adhere to chopsticks 3, the electrostatic capacitance is increased and detected. Therefore, first sensor 33a detects adhesion of water droplets without distinguishing them from a hand, a finger, or the like. Meanwhile, second sensor 33b is of a mutual capacitance type sensor, and detects the detection target using a decrease in electrostatic capacitance between the electrodes due to a part of the electromagnetic field being blocked when the detection target such as a hand or a finger approaches an electromagnetic field generated between the two electrodes. In the mutual capacitance method, when water droplets adhere to chopsticks 3, the electrostatic capacitance increases and does not decrease, and thus the water droplets are not detected. Therefore, second sensor 33b detects a hand, a finger, or the like in distinction from adhesion of water droplets.

Communication section 34 transmits the detection information (detection signal) output from control section 32 to monitoring device 20 by near field communication. Battery 35 supplies power to each section of meal sensor 31, such as control section 32, first sensor 33a, second sensor 33b, and communication section 34. Charging section 36 performs charging control for charging battery 35 with power transmitted from a wireless charger (not illustrated) provided in, for example, a kitchen or table 2 in a state where chopsticks 3 are placed on the wireless charger.

Management server 40 includes control section 42, storage section 44, and communication section 46. Control section 42 is configured as a microprocessor including a CPU as a main component, and includes a ROM, a RAM, and the like in addition to the CPU. Storage section 44 includes, for example, an HDD or the like, and receives information transmitted from monitoring device 20 and stores the information for a certain period of time. Communication section 46 is connected to communication sections 26 of one or more monitoring devices 20 via network 8, and exchanges information with communication sections 26 of monitoring devices 20. Monitoring person S can access management server 40 from his/her own mobile terminal P, a personal computer, or the like via network 8.

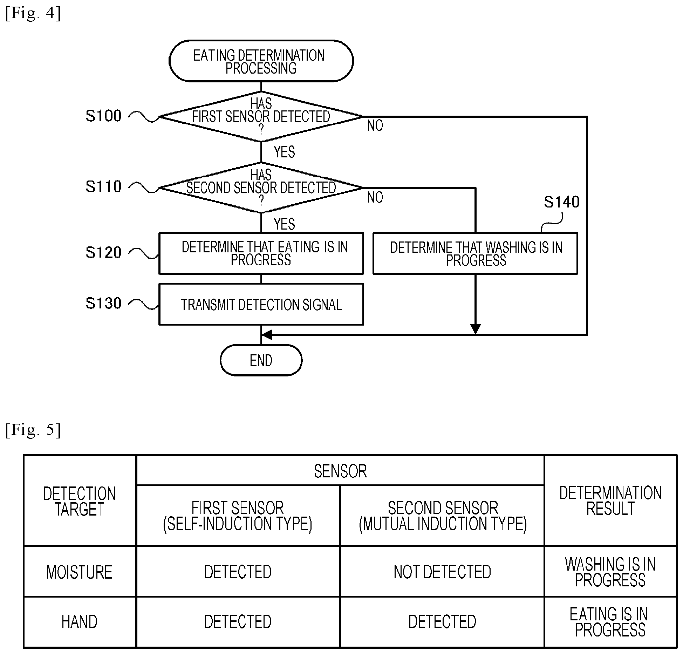

The following describes the operation of meal sensor 31 and the operation of monitoring device 20. Fig. 4 is a flowchart illustrating an example of the eating determination processing. This processing is executed by control section 32 of meal sensor 31.

In the eating determination processing, control section 32 first determines whether first sensor 33a has detected the change in the electrostatic capacitance (S100), and when it is determined that the change has not been detected, the eating determination processing ends. Meanwhile, when control section 32 determines that first sensor 33a has detected the change in the electrostatic capacitance, control section 32 determines whether second sensor 33b has detected a change in an electrostatic capacitance (S110). When control section 32 determines that second sensor 33b has detected the change in the electrostatic capacitance, control section 32 determines that the eating is in progress (S120), transmits a detection signal to monitoring device 20 (S130), and ends the eating determination processing. Meanwhile, when control section 32 determines in S110 that second sensor 33b has not detected the change in the electrostatic capacitance, control section 32 determines that the eating is not in progress and chopsticks 3 are being washed (S140), and ends the eating determination processing without transmitting the detection signal.

Fig. 5 is a diagram illustrating a relationship between the detection target, presence or absence of detection by the sensor, and the determination result. For example, when moisture adheres during washing of chopsticks 3, the detection target is the moisture, and thus, first sensor 33a of a self-induction type detects the moisture, but second sensor 33b of a mutual induction type does not detect the moisture. In this case, it is determined that washing is being performed in S140 described above. On the other hand, when grip portion 3b is gripped by the hand during the eating using chopsticks 3, both first sensor 33a of the self-induction type and second sensor 33b of the mutual induction type detect a detection target. In this case, it is determined that the eating is in progress in S120 described above. As described above, it is possible to prevent the adhesion of moisture during washing from being erroneously determined as the hand of the target person based on the combination of the presence or absence of detection by first sensor 33a and second sensor 33b, and thus, it is possible to more accurately determine that the eating is in progress. Further, since meal sensor 31 determines that the eating is in progress without using the acceleration sensor, the acceleration when chopsticks 3 are washed is not erroneously detected as an eating action.

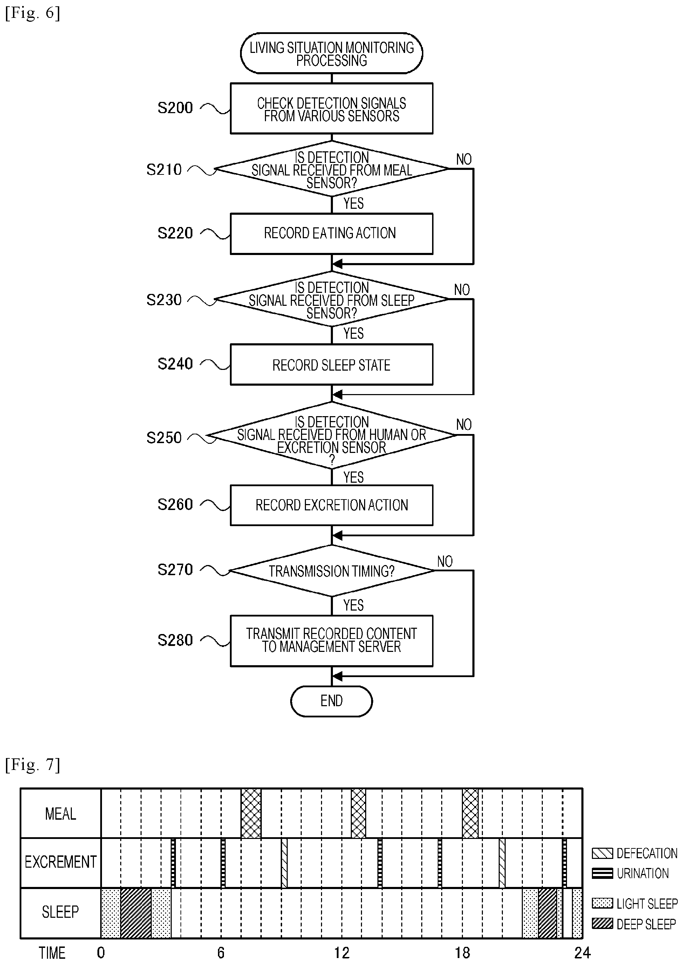

Next, the operation of monitoring device 20 will be described. Fig. 6 is a flowchart illustrating an example of living situation monitoring processing. This processing is executed by control section 22 of monitoring device 20.

**In** the living situation monitoring processing, control section 22 first checks the detection signals transmitted from various sensors 30 (S200), and determines whether the detection signal from meal sensor 31 is received (S210). When it is determined that the detection signal from meal sensor 31 is received, control section 22 records the eating action in association with the current date and time information (S220), and proceeds to S230. That is, control section 22 causes storage section 24 to store the date and time information and information indicating that the eating is in progress. When it is determined that the detection signal from meal sensor 31 is not received, control section 22 skips S220 and proceeds to S230.

Next, control section 22 determines whether a detection signal is received from sleep sensor 37 (S230). When it is determined that the detection signal from sleep sensor 37 is received, control section 22 records a sleep state in association with the current date and time information (S240), and proceeds to S250. Since sleep sensor 37 transmits a detection signal so as to be able to identify whether the sleep is deep sleep or light sleep, the sleep state including whether the sleep is deep sleep or light sleep is recorded. When it is determined that the detection signal from sleep sensor 37 is not received, control section 22 skips S240 and proceeds to S250.

Subsequently, control section 22 determines whether a detection signal has been received from human sensor 38 or excretion sensor 39 (S250). When it is determined that the detection signal from human sensor 38 or excretion sensor 39 has been received, control section 22 records an excretion action in association with the current date and time information (S260), and proceeds to S270. For example, when a detection signal is received from human sensor 38 in a state where it is not determined that the target person is excreting, control section 22 records the start of excretion and determines that the target person is excreting. When control section 22 receives the detection signal from excretion sensor 39 or no longer receives the detection signal from human sensor 38 in a state where it is determined that excretion is being performed, control section 22 records the completion of excretion. Since excretion sensor 39 transmits a detection signal so as to be able to identify whether the operation is the large washing operation or the small washing operation, the excretion action including whether the operation is defecation or urination is stored. When it is determined that the detection signal is not received from any of human sensor 38 and excretion sensor 39, control section 22 skips S260 and proceeds to S270.

Then, control section 22 determines whether timing is transmission timing of the recorded content (S270). The transmission timing may be, for example, a timing at each predetermined time intervals or a timing at which recording is performed in any of S220, S240, and S260. When it is determined that the timing is the transmission timing, control section 22 transmits the recorded content to management server 40 (S280), and ends the living situation monitoring processing. When it is determined that the timing is not the transmission timing, control section 22 skips S280 and ends the living situation monitoring processing. Control section 42 of management server 40 registers the living situation of the target person in storage section 44 based on the transmitted recorded content. Fig. 7 is a diagram illustrating an example of the living situation. As illustrated in the drawing, living situations such as the eating action, the excretion action, and the sleep state of the monitoring target person are registered in time series. Monitoring person S can access management server 40 from mobile terminal P or the like via network 8 to check the living situation registered in storage section 44. That is, in monitoring system 10, by visualizing the living situation to monitoring person S, monitoring person S can easily grasp the living situation of the target person.

Here, a correspondence relationship between the elements of the present embodiment and the elements of the present disclosure will be clarified. Chopsticks 3 of the present embodiment correspond to an eating utensil, first sensor 33a corresponds to a first sensor, second sensor 33b corresponds to a second sensor, control section 32 corresponds to a determination section, and communication section 34 corresponds to an output section. Storage section 24 of monitoring device 20 and storage section 44 of management server 40 correspond to a storage section. Further, in the present embodiment, an example of a meal monitoring method of the present disclosure has been clarified by describing the operation of monitoring system 10.

As described above, meal sensor 31 includes first sensor 33a and second sensor 33b having different changes in the electrostatic capacitance at the time of adhesion of a water droplet, determines whether the eating is in progress based on the detection results of first sensor 33a and second sensor 33b, and outputs the determination result to the outside. Therefore, the states of chopsticks 3 can be detected more accurately. In addition, it is possible to prevent the operation during washing of chopsticks 3 from being erroneously detected as the eating action, and to detect the eating action with higher accuracy.

In addition, meal sensor 31 determines that the eating is in progress when both first sensor 33a of the self-capacitance type and second sensor 33b of the mutual capacitance type detect the change in the electrostatic capacitance. On the other hand, meal sensor 31 determines that washing is being performed in a case where second sensor 33b does not detect the change in the electrostatic capacitance even when first sensor 33a detects the change in the electrostatic capacitance. Therefore, it is possible to more accurately detect whether the eating is in progress or the washing is in progress with simple processing. Further, since meal sensor 31 transmits the determination result when it is determined that the eating is in progress and does not transmit the determination result when it is determined that the eating is not in progress, it is possible to appropriately output that the eating is in progress and appropriately record the eating action.

In addition, when first sensor 33a and second sensor 33b are provided at distal end portion 3a of chopsticks 3, since first sensor 33a may detect moisture while second sensor 33b may not detect moisture during taking of soupy meal, there is a possibility that it may be erroneously determined that the washing is in progress. In the present embodiment, since first sensor 33a and second sensor 33b are provided in grip portion 3b of chopsticks 3, it is possible to appropriately prevent the erroneous determination. That is, it is possible to prevent an erroneous determination that washing is in progress during the taking of the soupy meal.

Further, management server 40 records not only the eating action based on the detection result (determination result) of meal sensor 31 but also the sleep state by sleep sensor 37 and the living situation including the excretion action by human sensor 38 and excretion sensor 39. Therefore, the monitoring person S can easily grasp the living situation of the target person by accessing management server 40.

It is needless to say that the present disclosure is not limited in any way to the above-described embodiment, and the present disclosure can be embodied in various aspects as long as the aspects fall within the technical scope of the appended claims.

In the above-described embodiment, first sensor 33a is the electrostatic capacitance sensor of the self-capacitance type, and second sensor 33b is the electrostatic capacitance sensor of the mutual capacitance type; however, the configuration is not limited to this. First sensor 33a and second sensor 33b may be any type as long as the changes in the electrostatic capacitance when water droplets adhere are different. Control section 32 needs only to determine the state of the eating utensil based on the difference in the degree of change in the electrostatic capacitance detected by each of first sensor 33a and second sensor 33b.

In the embodiment, each configuration including first sensor 33a and second sensor 33b of meal sensor 31 is disposed in grip portion 3b; however, the configuration is not limited to this, and a part of the configuration may be disposed in distal end portion 3a, an intermediate portion between distal end portion 3a and grip portion 3b, or a rear end portion on the rear end side of grip portion 3b. However, in order to appropriately detect the change in the electrostatic capacitance, it is preferable that first sensor 33a and second sensor 33b are disposed in grip portion 3b.

In the embodiment, meal sensor 31 transmits (outputs) the detection signal when it is determined that the eating is in progress in the eating determination processing, and does not transmit the detection signal when it is determined that the washing is in progress; however, the configuration is not limited to this, and meal sensor 31 may transmit the detection signal even when it is determined that the washing is in progress. In this case, meal sensor 31 needs only to transmit the detection signal so as to be able to identify whether the eating is in progress or the washing is in progress. Alternatively, meal sensor 31 may determine the state of the eating utensil by simply determining whether the eating is in progress, determining whether the washing is in progress, or the like.

In the embodiment, meal sensor 31 transmits the detection signal when it is determined that the eating is in progress in the eating determination processing; however, the configuration is not limited to this. For example, when it is determined that the eating is in progress, information indicating that the eating is in progress may be stored in the storage section in meal sensor 31 together with the date and time information, and may be transmitted at a subsequent timing, for example, a timing at which chopsticks 3 are placed on the wireless charger.

In the embodiment, meal sensor 31 determines whether the eating is in progress; however, the configuration is not limited to this. For example, meal sensor 31 may transmit the detection results of first sensor 33a and second sensor 33b to monitoring device 20, and monitoring device 20 may determine whether the eating is in progress.

In the embodiment, monitoring system 10 includes multiple sensors as sensor 30, but each sensor is an example, and the type and processing of each sensor are not limited to the content of the embodiment. For example, although sleep sensor 37 detects light sleep or deep sleep, sleep sensor 37 needs only to detect at least whether the sleep is in progress. Although human sensor 38 and the excretion sensor are used to detect the excretion action, the presence or absence of excretion may be detected using only one of the sensors. Excretion sensor 39 detects whether the operation is the large washing operation or the small washing operation, but needs only to detect at least the washing operation (presence or absence of excretion).

Monitoring system 10 is not limited to a system including a sensor other than meal sensor 31, and includes at least meal sensor 31 to need only to monitor whether the eating is in progress. In addition, the information (detection signal) related to the living situation such as eating is transmitted from meal sensor 31 to management server 40 via monitoring device 20; however, the configuration is not limited to this. For example, the data may be directly transmitted from meal sensor 31 to management server 40, or may be stored in storage section 24 of monitoring device 20 and transmitted to management server 40 as necessary. The information on the living situation may be directly transmitted to mobile terminal P of monitoring person S, or the living situation of the target person may be visualized by application software of mobile terminal P.

In the meal monitoring system and the meal monitoring method according to the present disclosure, the state of the eating utensil can be detected with higher accuracy as in the eating utensil described above. In the meal monitoring system and the meal monitoring method, various aspects of the eating utensil may be adopted, and a configuration or steps for achieving each function of the eating utensil may be added.

### Industrial Applicability

The present disclosure can be used in a technical field of monitoring a living situation such as a meal of a monitoring target person.

### Reference Signs List

1: house, 2: table, 3: chopsticks, 3a: distal end portion, 3b: grip portion, 4: bed, 6: toilet, 8: Internet, 10: monitoring system, 20: monitoring device, 22: control section, 24: storage section, 26: communication section, 28: display section, 29: speaker, 30: sensor, 31: meal sensor, 32: control section, 33a: first sensor, 33b: second sensor, 34: communication section, 35: battery, 36: charging section, 37: sleep sensor, 38: human sensor, 39: excretion sensor, 40: management server, 42: control section, 44: storage section, 46: communication section, P: mobile terminal, and S: monitoring person

## Claims

1. An eating utensil (3) used for eating, the eating utensil comprising:
a first sensor (33a) configured to detect a change in an electrostatic capacitance by a predetermined method and a second sensor (33b) configured to detect a change in an electrostatic capacitance by a method different from the predetermined method in a change in an electrostatic capacitance when a water droplet adheres;
a determination section configured to determine a state of the eating utensil based on detection results of the first and second sensors; and
an output section configured to output a determination result by the determination section to an outside;
**characterized in that**
the first sensor is an electrostatic capacitance sensor of a self-capacitance type,
the second sensor is an electrostatic capacitance sensor of a mutual capacitance type, and
the determination section determines that eating is in progress when both the first and second sensors detect the change in the electrostatic capacitance, and determines that the eating is not in progress and the eating utensil is being washed when the first sensor detects the change in the electrostatic capacitance and the second sensor does not detect the change in the electrostatic capacitance.

2. The eating utensil according to Claim 1, wherein
the output section outputs the determination result to the outside when the determination section determines that the eating is in progress, and does not output the determination result to the outside when the determination section determines that the eating is not in progress.

3. The eating utensil according to Claim 1 or 2, wherein
the first and second sensors are provided in a grip portion of the eating utensil to be gripped by a hand.

4. A meal monitoring system for monitoring whether a monitoring target person is eating, the meal monitoring system comprising:
a first sensor (33a) provided in an eating utensil used for eating and configured to detect a change in an electrostatic capacitance by a predetermined method and a second sensor (33b) provided in the eating utensil and configured to detect a change in an electrostatic capacitance by a method different from the predetermined method in a change in an electrostatic capacitance when a water droplet adheres;
a determination section configured to determine a state of the eating utensil based on detection results of the first and second sensors; and
a storage section configured to store a determination result by the determination section;
**characterized in that**
the first sensor is an electrostatic capacitance sensor of a self-capacitance type,
the second sensor is an electrostatic capacitance sensor of a mutual capacitance type, and
the determination section determines that eating is in progress when both the first and second sensors detect the change in the electrostatic capacitance, and determines that the eating is not in progress and the eating utensil is being washed when the first sensor detects the change in the electrostatic capacitance and the second sensor does not detect the change in the electrostatic capacitance.

5. A meal monitoring method for monitoring whether a monitoring target person is eating, the meal monitoring method comprising:
(a) a step (S110, S110) of acquiring detection results detected by a first sensor provided in an eating utensil used for eating and configured to detect a change in an electrostatic capacitance by a predetermined method and a second sensor provided in the eating utensil and configured to detect the change in the electrostatic capacitance by a method different from the predetermined method in the change in the electrostatic capacitance when a water droplet adheres;
(b) a step of determining a state of the eating utensil based on the detection results acquired in the step (a); and
(c) a step of storing a determination result determined in the step (b) in a storage section,
**characterized in that**
the first sensor is an electrostatic capacitance sensor of a self-capacitance type,
the second sensor is an electrostatic capacitance sensor of a mutual capacitance type, and
the step of determining comprises determining (S120) that eating is in progress when both the first and second sensors detect the change in the electrostatic capacitance, and determining (S140) that the eating is not in progress and the eating utensil is being washed when the first sensor detects the change in the electrostatic capacitance and the second sensor does not detect the change in the electrostatic capacitance.

## Patentansprüche

1. Essbesteck (3), das zum Essen verwendet wird, wobei das Essbesteck umfasst:
einen ersten Sensor (33a), der zum Erfassen einer Änderung einer elektrischen Kapazität mittels eines vorgegebenen Verfahrens ausgeführt ist, sowie einen zweiten Sensor (33b), der zum Erfassen einer Änderung einer elektrischen Kapazität mittels eines Verfahrens, das sich von dem vorgegebenen Verfahren unterscheidet, bei einer Änderung einer elektrischen Kapazität beim Anhaften eines Wassertröpfchens ausgeführt ist;
einen Feststellungsabschnitt, der so ausgeführt ist, dass er einen Status des Essbestecks auf Basis von Erfassungsergebnissen des ersten und des zweiten Sensors feststellt; sowie
einen Ausgabeabschnitt, der so ausgeführt ist, dass er ein Feststellungsergebnis des Feststellungsabschnitts nach außen ausgibt;
**dadurch gekennzeichnet, dass**
der erste Sensor ein Sensor für elektrische Kapazität eines Eigenkapazitäts-Typs ist,
der zweite Sensor ein Sensor für elektrische Kapazität eines Gegenkapazitäts-Typs ist, und
der Feststellungsabschnitt feststellt, dass gegessen wird, wenn sowohl der erste als auch der zweite Sensor die Änderung der elektrischen Kapazität feststellen, und feststellt, dass nicht gegessen wird und das Essbesteck abgewaschen wird, wenn der erste Sensor die Änderung der elektrischen Kapazität erfasst und der zweite Sensor die Änderung der elektrischen Kapazität nicht erfasst.

2. Essbesteck nach Anspruch 1, wobei
der Ausgabeabschnitt das Feststellungsergebnis nach außen ausgibt, wenn der Feststellungsabschnitt feststellt, dass gegessen wird, und das Feststellungsergebnis nicht nach außen ausgibt, wenn der Feststellungsabschnitt feststellt, dass nicht gegessen wird.

3. Essbesteck nach Anspruch 1 oder 2, wobei
der erste und der zweite Sensor sich in einem mit einer Hand zu ergreifenden Griffabschnitt des Essbestecks befinden.

4. Mahlzeiten-Überwachungssystem, mit dem überwacht wird, ob eine Überwachungs-Zielperson isst, wobei das Mahlzeiten-Überwachungssystem umfasst:
einen ersten Sensor (33a), der sich in einem zum Essen verwendeten Essbesteck befindet und zum Erfassen einer Änderung einer elektrischen Kapazität mittels eines vorgegebenen Verfahrens ausgeführt ist, sowie einen zweiten Sensor (33b), der sich in dem Essbesteck befindet und zum Erfassen einer Änderung einer elektrischen Kapazität mittels eines Verfahrens, das sich von dem vorgegebenen Verfahren unterscheidet, bei einer Änderung einer elektrischen Kapazität beim Anhaften eines Wassertröpfchens ausgeführt ist;
einen Feststellungsabschnitt, der so ausgeführt ist, dass er einen Status des Essbestecks auf Basis von Erfassungsergebnissen des ersten und des zweiten Sensors feststellt; sowie
einen Speicherabschnitt, der so ausgeführt ist, dass er ein Feststellungsergebnis des Feststellungsabschnitts speichert;
**dadurch gekennzeichnet, dass**
der erste Sensor ein Sensor für elektrische Kapazität eines Eigenkapazitäts-Typs ist,
der zweite Sensor ein Sensor für elektrische Kapazität eines Gegenkapazitäts-Typs ist, und
der Feststellungsabschnitt feststellt, dass gegessen wird, wenn sowohl der erste als auch der zweite Sensor die Änderung der elektrischen Kapazität feststellen, und feststellt, dass nicht gegessen wird und das Essbesteck abgewaschen wird, wenn der erste Sensor die Änderung der elektrischen Kapazität erfasst und der zweite Sensor die Änderung der elektrischen Kapazität nicht erfasst.

5. Mahlzeiten-Überwachungsverfahren, mit dem überwacht wird, ob eine Überwachungs-Zielperson isst, wobei das Mahlzeiten-Überwachungsverfahren umfasst:
(a) einen Schritt (S110, S110) zum Beziehen von Erfassungsergebnissen, die durch einen ersten Sensor, der sich in einem zum Essen verwendeten Essbesteck befindet und zum Erfassen einer Änderung einer elektrischen Kapazität mittels eines vorgegebenen Verfahrens ausgeführt ist, sowie einen zweiten Sensor erfasst werden, der sich in dem Essbesteck befindet und zum Erfassen der Änderung der elektrischen Kapazität mittels eines Verfahrens, das sich von dem vorgegebenen Verfahren unterscheidet, bei der Änderung der elektrischen Kapazität beim Anhaften eines Wassertröpfchens ausgeführt ist;
(b) einen Schritt zum Feststellen eines Zustandes des Essbestecks auf Basis der in dem Schritt (a) bezogenen Erfassungsergebnisse; sowie
(c) einen Schritt zum Speichern eines in dem Schritt (b) festgestellten Feststellungsergebnisses in einem Speicherabschnitt,
**dadurch gekennzeichnet, dass**
der erste Sensor ein Sensor für elektrische Kapazität eines Eigenkapazitäts-Typs ist, der zweite Sensor ein Sensor für elektrische Kapazität eines Gegenkapazitäts-Typs ist, und
der Schritt zum Feststellen umfasst, dass festgestellt wird (S120), dass gegessen wird, wenn sowohl der erste als auch der zweite Sensor die Änderung der elektrischen Kapazität feststellen, und festgestellt wird (S140), dass nicht gegessen wird und das Essbesteck abgewaschen wird, wenn der erste Sensor die Änderung der elektrischen Kapazität erfasst und der zweite Sensor die Änderung der elektrischen Kapazität nicht erfasst.

## Revendications

1. Ustensile alimentaire (3) utilisé pour manger, l'ustensile alimentaire comprenant :
un premier capteur (33a) configuré pour détecter un changement dans une capacité électrostatique selon un procédé prédéterminé et un second capteur (33b) configuré pour détecter un changement dans une capacité électrostatique selon un procédé différent du procédé prédéterminé dans un changement dans une capacité électrostatique lorsqu'une gouttelette d'eau adhère ;
une section de détermination configurée pour déterminer un état de l'ustensile alimentaire sur la base des résultats de détection du premier et du second capteur ; et
une section de sortie configurée pour émettre un résultat de détermination par la section de détermination vers un extérieur ;
**caractérisé en ce que**
le premier capteur est un capteur de capacité électrostatique d'un type auto-capacité,
le second capteur est un capteur de capacité électrostatique d'un type de capacité mutuelle, et
la section de détermination détermine qu'un repas est en cours lorsqu'à la fois le premier et le second capteur détectent le changement dans la capacité électrostatique, et détermine que le repas n'est pas en cours et que l'ustensile alimentaire est lavé lorsque le premier capteur détecte le changement dans la capacité électrostatique et que le second capteur ne détecte pas de changement dans la capacité électrostatique.

2. Ustensile alimentaire selon la revendication 1, dans lequel
la section de sortie délivre le résultat de détermination vers l'extérieur lorsque la section de détermination détermine que le repas est en cours, et ne délivre pas le résultat de détermination vers l'extérieur lorsque la section de détermination détermine que le repas n'est pas en cours.

3. Ustensile alimentaire selon la revendication 1 ou 2, dans lequel
le premier et le second capteur sont pourvus d'une portion de préhension de l'ustensile alimentaire à saisir par une main.

4. Système de suivi des repas pour surveiller si une personne cible de suivi mange, le système de suivi des repas comprenant :
un premier capteur (33a) prévu dans un ustensile alimentaire utilisé pour manger et configuré pour détecter un changement dans une capacité électrostatique selon un procédé prédéterminé et un second capteur (33b) prévu dans l'ustensile alimentaire et configuré pour détecter un changement dans une capacité électrostatique selon un procédé différent du procédé prédéterminé dans un changement dans une capacité électrostatique lorsqu'une gouttelette d'eau adhère ;
une section de détermination configurée pour déterminer un état de l'ustensile alimentaire sur la base des résultats de détection du premier et du second capteur ; et
une section de stockage configurée pour stocker un résultat de détermination par la section de détermination ;
**caractérisé en ce que**
le premier capteur est un capteur de capacité électrostatique d'un type capacité propre,
le second capteur est un capteur de capacité électrostatique d'un type de capacité mutuelle, et
la section de détermination détermine qu'un repas est en cours lorsqu'à la fois le premier et le second capteur détectent le changement dans la capacité électrostatique, et détermine que le repas n'est pas en cours et que l'ustensile alimentaire est lavé lorsque le premier capteur détecte le changement dans la capacité électrostatique et que le second capteur ne détecte pas de changement dans la capacité électrostatique.

5. Procédé de suivi des repas pour surveiller si une personne cible de suivi mange, le procédé de suivi des repas comprenant :
(a) une étape (S110, S110) d'acquisition des résultats de détection détectés par un premier capteur prévu dans un ustensile alimentaire utilisé pour manger et configuré pour détecter un changement dans une capacité électrostatique selon un procédé prédéterminé et un second capteur prévu dans l'ustensile alimentaire et configuré pour détecter le changement dans la capacité électrostatique selon un procédé différent du procédé prédéterminé dans le changement dans la capacité électrostatique lorsqu'une gouttelette d'eau adhère ;
(b) une étape de détermination d'un état de l'ustensile alimentaire sur la base des résultats de détection acquis dans l'étape (a) ; et
(c) une étape de stockage d'un résultat de détermination déterminé dans l'étape (b) dans une section de stockage,
**caractérisé en ce que**
le premier capteur est un capteur de capacité électrostatique d'un type capacité propre,
le second capteur est un capteur de capacité électrostatique d'un type de capacité mutuelle, et
l'étape de détermination comprend la détermination (S120) qu'un repas est en cours lorsqu'à la fois le premier et le second capteur détectent le changement dans la capacité électrostatique, et la détermination (S140) que le repas n'est pas en cours et que l'ustensile alimentaire est lavé lorsque le premier capteur détecte le changement dans la capacité électrostatique et que le second capteur ne détecte pas de changement dans la capacité électrostatique.
